# EUROPÄISCHE PATENTSCHRIFT

(11) **EP 3 543 844 B1**
(45) Veröffentlichungstag und Bekanntmachung des Hinweises auf die Patenterteilung: **29.04.2020**
(21) Anmeldenummer: 18163323.1
(22) Anmeldetag: 22.03.2018
(51) Int. Cl.: G06F 8/70, G06F 9/451, G06F 8/34, G06F 8/36, G06F 9/455, G06F 17/24, G06F 17/28

(54) **VERFAHREN ZUM DURCHFÜHREN VON ÄNDERUNGEN AN EINER SOFTWARE-ANWENDUNG**
METHOD FOR CARRYING OUT CHANGES TO A SOFTWARE APPLICATION
PROCÉDÉ DE MISE EN OEUVRE DE MODIFICATIONS D'UNE APPLICATION LOGICIELLE

(43) Veröffentlichungstag der Anmeldung: 25.09.2019
(73) Patentinhaber: SICK AG, 79183 Waldkirch (DE)
(72) Erfinder: MARTEL, Christopher, 77977 Rust (DE)
(74) Vertreter: Manitz Finsterwald Patent- und Rechtsanwaltspartnerschaft mbB

(56) Entgegenhaltungen:
- WO-A1-01/08006
- US-A1- 2003 001 854
- US-B2- 6 904 563

## Beschreibung

Die vorliegende Erfindung betrifft ein Verfahren zum Durchführen von Änderungen an einer Software-Anwendung. Die Software-Anwendung umfasst einen Applikations-Code, welcher insbesondere das Verhalten der Software-Anwendungen bestimmt.

Software-Anwendungen werden üblicherweise für einen weltweiten Markt verfasst, so dass die Software-Anwendung in unterschiedlichen Sprachen (multilingual) angeboten werden muss. Dafür ist es notwendig, existierenden Text der Software-Anwendung aus der Originalsprache in die entsprechenden weiteren Sprachen zu übersetzen.

Es ist bekannt, hierzu ein Redaktionssystem, beispielsweise ein Content-Management-System (CMS) zu verwenden, in welches die übersetzten Texte eingepflegt werden und welches den Originaltext speichert.

Nachteiligerweise ist in solchen CMS-Systemen der Originaltext nicht im Kontext der Anwendung und auch nicht im Kontext von anderen Textbausteinen zu erkennen. Hierdurch können Probleme bei der Übersetzung auftreten, so dass fehlerhafte Übersetzungen erzeugt werden, welche beispielsweise nicht zum Kontext passen. Dadurch müssen oft mehrere zeit- und kostenintensive Iterationen durchlaufen werden, bis die passende Übersetzung vorliegt.

Ein Verfahren gemäß dem Oberbegriff des Anspruchs 1 ist aus der US 6 904 563 B2 bekannt. Die WO 01/08006 A1 lehrt ein introspektives Editor-System. Die Verwendung der Injektion zur Erfassung von Kontextinformationen eines angezeigten Objekts lehrt die US 2003/001854 A1.

Es ist die der Erfindung zugrundeliegende Aufgabe, ein Verfahren zur Änderung oder Anpassung einer Software-Anwendung anzugeben, welches es ermöglicht, Übersetzungen mit verringertem Zeitaufwand zu erstellen und insbesondere die genannten Iterationen zur Korrektur von Übersetzungsfehlern vermeidet.

Diese Aufgabe wird erfindungsgemäß durch ein Verfahren gemäß Anspruch 1 gelöst.

Gemäß dem erfindungsgemäßen Verfahren werden Änderungen an einer Software-Anwendung durchgeführt, wobei die Software-Anwendung einen Applikations-Code umfasst. Zudem weist die Software-Anwendung eine grafische Benutzerschnittstelle (GUI) auf. Das erfindungsgemäße Verfahren umfasst die Schritte
- Injizieren einer dynamischen Bibliothek in die Software-Anwendung, um eine Steuerung der Software-Anwendung zu gestatten,
- Auslesen zumindest eines Abschnitts des Applikations-Codes, wobei der Abschnitt die GUI betrifft,
- Verändern eines Bereichs der GUI und Speichern des geänderten Bereichs der GUI.

Die Verfahrensschritte werden in der vorstehend genannten Reihenfolge durchgeführt.

Die Erfindung setzt auf der Erkenntnis auf, dass durch die Injektion der dynamischen Bibliothek die Software-Anwendung mittels der injizierten dynamischen Bibliothek gesteuert werden kann. Durch das Steuern ist es dann wieder möglich, einen Teil bzw. Abschnitt des Applikations-Codes der Software-Anwendung auszulesen, diesen dann beispielsweise darzustellen und die GUI der Software-Anwendung direkt und/oder indirekt zu verändern. Insbesondere bei der Erstellung von Übersetzungen ergibt sich somit der Vorteil, dass der zu übersetzende Text in seinem Kontext in der GUI der Software-Anwendung erfasst werden kann. Fehlerhafte Übersetzungen aufgrund einer falschen Interpretation mangels Kontext können auf diese Weise vermieden werden. Der Prozess des Übersetzens von Software-Anwendungen kann somit deutlich beschleunigt und effizienter gestaltet werden.

Zudem ist von Vorteil, dass insbesondere auch ausschließlich ein Teil (d.h. der genannte Abschnitt) des Applikations-Codes ausgelesen bzw. extrahiert werden kann. Es muss also nicht die vollständige Software-Anwendung ausgelesen werden, wodurch eine Einsparung von Rechenleistung und Speicher auf dem Computersystem erzielt wird, welches das Verfahren durchführt.

Nach dem Auslesen des Abschnitts kann eine Instanz und/oder Kopie des Abschnitts erzeugt werden, der dann für die Veränderung des Bereichs der GUI verwendet wird. Die Änderung des Bereichs der GUI kann insbesondere in einer separaten Anwendung und/oder in einer separaten Benutzerschnittstelle (der weiter unten genannten Editor-Software) erfolgen, wie später noch näher ausgeführt wird.

Kurz gesagt ermöglicht es die Erfindung also, in einer Software-Anwendung beispielsweise durch Auswahl mit einer Maus ein bestimmtes Fenster oder ein bestimmtes Textfeld zu markieren und das Textfeld dann zur Laufzeit (d.h. live) zu verändern. Auf diese Weise kann gleich erkannt werden, ob die Übersetzung korrekt ist und beispielsweise auch in das vorgesehene Textfeld passt. Anschließend kann der geänderte Bereich der GUI gespeichert werden, um auf diese Weise z.B. den übersetzten Text (d.h. den geänderten Bereich der GUI) in einer Datenbank, in der später erwähnten Ressourcen-Datei und/oder dem vorne erwähnten Content Management System zu speichern.

Hierbei hat sich erfindungsgemäß herausgestellt, dass das Injizieren der dynamischen Bibliothek es in vorteilhafter Weise ermöglicht, die Steuerung verschiedener Software-Anwendungen zu gestatten, ohne dass ein direkter Zugriff auf den Quellcode der Software-Anwendung vorliegen muss. Hierdurch wird es insbesondere ermöglicht, dass beispielsweise Übersetzungsbüros bereits fertige Software-Anwendungen auf einfache Weise übersetzen können.

Die injizierte dynamische Bibliothek kann auch als Injektor bezeichnet werden. Mit dem Begriff dynamische Bibliothek ist insbesondere jeweils eine dynamisch verlinkte/eingebundene Bibliothek gemeint. Die Injektion der dynamischen Bibliothek kann insbesondere auch eine "DLL-Injection" sein, wobei der Code des Injectors im Adressraum der Software-Anwendung ausgeführt wird. Der Injektor ist bevorzugt eine Komponente der unten erläuterten Editor-Software in Form einer dynamischen Bibliothek, welche als Schnittstelle zu der Software-Anwendung dient. Der Injektor umfasst bevorzugt eine Anwendungslogik für das Parsen und Auswerten (d.h. z.B. für das Auslesen und Extrahieren von Code) der Software-Anwendung.

Nur zur Klarstellung sei erwähnt, dass hierin die Verwendung des Begriffs "verschiedene Sprachen" sich auf verschiedene menschliche Sprachen (z.B. Englisch, Spanisch oder Deutsch) bezieht und nicht auf verschiedene Programmiersprachen.

Vorteilhafte Weiterbildungen der Erfindung sind der Beschreibung, den Unteransprüchen und den Figuren zu entnehmen.

Gemäß einer ersten vorteilhaften Ausführungsform erfolgt das Auslesen des Abschnitts des Applikations-Codes mittels "Reflection". Als Reflection ist das Auslesen von Informationen und insbesondere Metainformationen aus einem Applikations-Code zu verstehen. Die Reflection ermöglicht es bei objektorientierter Programmierung beispielsweise, zur Laufzeit Informationen über Klassen oder deren Instanzen abzufragen. Die Reflection ist insbesondere auch unter dem Begriff der Introspektion bekannt. Durch die Reflection können beispielsweise die Sichtbarkeit, der Datentyp eines Rückgabewerts oder der Typ der Übergabeparameter einer Methode abgefragt werden. Die Reflection ist z.B. dann möglich, wenn der Applikations-Code mittels eines Frameworks erzeugt wurde, welches in einer virtuellen Umgebung ausgeführt wird (beispielsweise Java, .NET oder Smalltalk).

Die Reflection bietet insbesondere den Vorteil, dass standardmäßig vorhandene Prozeduren und Methoden verwendet werden können, um den Abschnitt des Applikations-Codes auszulesen. Hierdurch wird es wiederum erreicht, dass Verarbeitungsschritte eingespart werden können, wodurch das Verfahren wiederum effizient durchgeführt werden kann.

Erfindungsgemäß ist der Applikations-Code ausführbarer Code, in welchen das Injizieren zu seiner Laufzeit erfolgt. Das Injizieren der dynamischen Bibliothek in den ausführbaren Code erfolgt also, während die Software-Anwendung ausgeführt wird. Hierdurch ergibt sich der Vorteil, dass - wie oben angedeutet - insbesondere der Kontext der zu übersetzenden Textbausteine für den Übersetzer sichtbar ist, da die Software-Anwendung beispielsweise ihren "normalen" Betrieb durchführen kann. Auf diese Weise wird beim Übersetzer ein gesteigertes Verständnis des Kontexts der Textbausteine geschaffen, so dass Übersetzungsfehler verringert werden können, wodurch sich eine Zeiteinsparung und ein Effizienzgewinn ergeben.

Gemäß einer weiteren vorteilhaften Ausführungsform umfasst die dynamische Bibliothek ausführbaren Code, welcher nach dem Injizieren ausgeführt wird. Bei der dynamischen Bibliothek kann es sich beispielsweise um eine Dynamic Link Library (DLL) handeln, die den ausführbaren Code umfasst. Nach dem Injizieren kann der Code der injizierten dynamischen Bibliothek gemeinsam mit der Software-Anwendung ausgeführt werden. Die dynamische Bibliothek greift dabei auf die Software-Anwendung zu und kann beispielsweise die weiteren mit der Software-Anwendung verknüpften dynamischen Bibliotheken (z.B. DLLs) abrufen bzw. extrahieren. Eine derart extrahierte dynamische Bibliothek, welche ursprünglicher Bestandteil der Software-Anwendung ist, kann somit den ausgelesenen Abschnitt des Applikations-Codes bilden. Der ausgelesene Abschnitt wird erfindungsgemäß in binärer Form, d.h. als Binär-Code ausgelesen. Bei dem Applikations-Code handelt es sich insbesondere auch um binären Code, d.h. ausführbaren Code.

Unter einem binären Code ist insbesondere ausführbarer Code und/oder Bytecode zu verstehen. Für das .NET Framework, kann der binäre Code der GUI beispielsweise in der Form einer BAML-Datei (Binary Application Markup Language) vorliegen. Demgegenüber ist unter einem Quellcode ein noch nicht von einer Maschine ausführbarer Code zu verstehen, wobei der Quellcode üblicherweise derart gestaltet ist, dass er für einen menschlichen Programmierer verständlich ist. Für z.B. das .NET Framework kann eine XAML-Quellcode-Datei (Extensible Application Markup Language) in eine BAML-Datei kompiliert werden.

Gemäß einer weiteren vorteilhaften Ausführungsform wird nach dem Auslesen des Abschnitts des Applikations-Codes der Abschnitt dekompiliert. Beim Dekompilieren kann der ausführbare Code bzw. der Applikations-Code in einen Quellcode zurückverwandelt werden. Beispielsweise kann eine BAML-Datei in eine XAML-Datei umgewandelt werden.

Das Dekompilieren besitzt den Vorteil, dass z.B. im leichter zu bearbeitenden XAML-Format dann die Veränderung der GUI vorgenommen werden kann. Die Übersetzung eines Textbausteins kann damit auf einfache Weise vorgenommen werden, wodurch wiederum eine Einsparung der notwendigen Speicherkapazität, der notwendigen Rechenleistung und Zeit erzielt werden kann. Insbesondere können aus der XAML-Datei und/oder aus dem dekompilierten Abschnitt die entsprechenden Textbausteine ermittelt werden und gegebenenfalls als Instanzen in der nachstehend genannten Reproduktion verwendet werden.

Gemäß einer weiteren vorteilhaften Ausführungsform wird aus dem Abschnitt des Applikations-Codes eine grafische Reproduktion zumindest eines Teils der GUI der Software-Anwendung erzeugt, wobei die grafische Reproduktion bevorzugt in einer weiteren grafischen Benutzerschnittstelle dargestellt wird. Die Reproduktion kann also beispielsweise in einem zweiten Fenster und/oder in einem weiteren Anwendungsfenster dargestellt werden, insbesondere auf demselben Bildschirm oder auf einem zweiten Monitor.

In der Reproduktion kann daher das Aussehen und auch das "Look and Feel" der GUI der Software-Anwendung zumindest im Wesentlichen vollständig nachempfunden sein, so dass sich dem Übersetzer auch Zusammenhänge innerhalb der Software-Anwendung und damit der Kontext erschließt.

Die Reproduktion kann bevorzugt innerhalb einer Editor-Software, welche eine von der Software-Anwendung separate Software ist, dargestellt und/oder erzeugt werden. Die Editor-Software kann eine Editor-Benutzerschnittstelle (Editor-GUI) umfassen, innerhalb welcher die Reproduktion dargestellt wird. Die Editor-GUI kann auch dazu eingerichtet sein, die zu übersetzende Software-Anwendung auszuwählen und/oder die Veränderungen an der GUI der Software-Anwendung darzustellen. In der Editor-Software können auch die (originale) GUI der Software-Anwendung und die Reproduktion zeitgleich und/oder nebeneinander dargestellt werden, um eine Übersicht über das "Vorher-Nachher" zu geben.

Die Editor-Software kann auch weitere der genannten Verfahrensschritte ausführen, beispielsweise das Injizieren, das Auslesen und/oder das Dekompilieren.

Die Editor-Software kann in einer sogenannten "Sandbox" ausgeführt werden, d.h. abgeschottet von anderen Programmen und/oder mit eingeschränkten Zugriffsrechten. Durch die Sandbox kann ein Eingriff eines Virenscanners oder sonstiger Sicherheitssoftware bei der Durchführung der Injektion verhindert werden.

Gemäß einer weiteren vorteilhaften Ausführungsform wird eine Veränderung der grafischen Reproduktion vorgenommen, wobei die Veränderung der Reproduktion beispielsweise eine entsprechende Veränderung des Abschnitts des Applikations-Codes bewirkt. Dies bedeutet, die Veränderung der GUI wird insbesondere in der Reproduktion vorgenommen. Der Ausdruck "Verändern eines Bereichs der GUI" ist demnach so zu verstehen, dass in irgendeiner Form für den Benutzer ersichtlich ist, wie sich die Veränderung der GUI auswirkt. Die Veränderung kann beispielsweise das Ersetzen eines originalen Textbausteins durch einen Textbaustein in einer anderen Sprache (Übersetzung) beinhalten. Durch die Veränderung der grafischen Reproduktion wird dann direkt zur Laufzeit (d.h. "live") bevorzugt das veränderte Textelement im Kontext der Software-Anwendung betrachtet werden. Durch die Veränderung der Reproduktion kann parallel auch der Abschnitt des Applikationscodes verändert werden. Ebenfalls ist es möglich, eine Kopie und/oder Instanz des Applikations-Codes zu verändern oder allein den geänderten (z.B. übersetzten) Text zu speichern (z.B. in der unten erläuterten Ressourcen-Datei).

Neben einer bloßen Änderung von Textbausteinen können auch grafische Elemente der GUI der Software-Anwendung verändert werden. Beispielsweise kann eine Veränderung des Texts eine Änderung der Größe einer Schaltfläche ("Button") notwendig machen, wenn der übersetzte Text länger als der Original-Text ist. Auch kann beispielsweise die Größe von Umrandungen oder Textfeldern geändert werden. Hierdurch werden ebenfalls Veränderungen des Abschnitts des Applikationscodes und/oder dessen Instanz und/oder Kopie bewirkt. Bevorzugt kann das Verfahren hierzu ausgestaltet sein, die Attribute von Windows-Forms-Elementen zu verändern.

Insbesondere wird das Verfahren für Software-Anwendungen eingesetzt, welche die Windows Presentation Foundation (WPF) verwenden. Für solche Software-Anwendungen ergibt sich eine weitere Reduktion der notwendigen Rechenleistung, da hier wiederum Standard-Routinen eingesetzt werden können, um z.B. das Dekompilieren durchzuführen.

Bevorzugt wird die Veränderung der grafischen Reproduktion mittels eines Anzeigegeräts dargestellt, um die Auswirkung der Veränderung darzustellen. Bei dem Anzeigegerät kann es sich insbesondere um einen Bildschirm handeln, so dass sofort ein Vergleich (Vorher-Nachher) ersichtlich ist.

Gemäß einer weiteren vorteilhaften Ausführungsform wird mittels eines Eingabegeräts ein Bereich oder eine Position in der GUI ausgewählt, wobei der ausgelesene Abschnitt des Applikationscodes den ausgewählten Bereich und/oder die ausgewählte Position betrifft. Es kann folglich jeweils nur derjenige Abschnitt des Applikations-Codes ausgelesen werden, welcher den vom Benutzer mittels des Eingabegeräts ausgewählten Bereich und/oder Position betrifft. Hierzu kann beispielsweise mittels IDs (Identifikationsmarken) erkannt werden, welche Position in der GUI zu welchem Abschnitt des Applikations-Codes gehört. Wenn beispielsweise ein Textbaustein mittels des Eingabegeräts ausgewählt wird, dann kann, insbesondere ausschließlich, derjenige Abschnitt des Applikationscodes ausgelesen werden, der für die Funktion und/oder die Darstellung des Textbausteins verantwortlich ist. Durch ein solches selektives Auslesen nur kleiner Abschnitte des Applikationscodes kann eine Dateneinsparung bewirkt werden. Der so ausgelesene Abschnitt wird dann insbesondere dekompiliert und als Reproduktion dargestellt. Nach dem Darstellen der Reproduktion ist schließlich eine Veränderung der GUI (z.B. innerhalb der Reproduktion) möglich.

Bei dem Eingabegerät kann es sich beispielsweise um eine Maus und/oder einen Touchscreen handeln. Zur Bestimmung des auszulesenden Abschnitts des Applikationscodes wird insbesondere die Mausposition bzw. eine Fingerposition auf dem Touchscreen ermittelt.

Erfindungsgemäß wird beim Verändern der GUI ein Grafikelement geändert, wobei das Grafikelement bevorzugt ein Textbaustein ist, wobei die Veränderung der GUI erfindungsgemäß eine Veränderung des Abschnitts des Applikations-Codes und/oder einer Instanz des Abschnitts des Applikations-Codes bewirkt. Wie bereits weiter oben angedeutet, kann eine Veränderung, d.h. beispielsweise das Erstellen einer Übersetzung, sofort eine Auswirkung auf den Abschnitt und/oder die Instanz des Abschnitts in Applikationscodes haben. Beispielsweise kann eine Schriftgröße, eine Farbe, eine Größe von Textfeldern, eine Größe von Schaltflächen und/oder eine Schriftrichtung (z.B. für Arabisch oder Japanisch) geändert werden.

Alternativ oder zusätzlich ist es auch möglich, die Änderungen in einer Ressourcen-Datei abzulegen. Bei der Ressourcen-Datei kann es sich beispielsweise um eine Excel-Datei, eine CSV-Datei oder eine Textdatei handeln. In der Ressourcendatei können nach dem Übersetzungsvorgang dann beispielsweise sämtliche übersetzten Textbausteine abgespeichert sein. Zusätzlich können in der Ressourcendatei neben den übersetzten Textbausteinen auch die Originaltextbausteine den übersetzten Textbausteinen zugeordnet sein.

Gemäß einer weiteren vorteilhaften Ausführungsform wird die Ressourcen-Datei in die Editor-Software eingelesen, insbesondere vor der Darstellung der Reproduktion. Nach der Veränderung der GUI der Software-Anwendung können die vorgenommenen Änderungen, insbesondere von der Editor-Software, in der Ressourcen-Datei abgespeichert werden.

Gemäß einer weiteren vorteilhaften Ausführungsform wird eine Datenverbindung mit einem Redaktionssystem (CMS) hergestellt, wobei in dem CMS bevorzugt zumindest ein Teil von in der Software-Anwendung enthaltenen Textbausteinen gespeichert ist, wobei Veränderungen an der GUI und/oder an dem Abschnitt des Applikations-Codes an das CMS übertragen werden. An das CMS kann somit jeweils übermittelt werden, zu welchem Original-Textbaustein welche Übersetzung angefertigt wurde. Die Datenübertragung an das CMS kann beispielsweise mittels einer Datenverbindung erfolgen. Alternativ ist es auch möglich, die Veränderungen an der GUI in der Ressourcendatei zu speichern und die Ressourcendatei danach an das CMS zu übertragen. Basierend auf der dann in dem CMS gespeicherten Übersetzung, kann eine neue Anwendungs-Software dann mit der Übersetzung aus dem CMS heraus erzeugt werden. Die Datenverbindung zu dem CMS kann beispielsweise durch eine Ethernet-Verbindung hergestellt werden.

Gemäß einer weiteren vorteilhaften Ausführungsform wird die Veränderung der GUI zunächst in einem flüchtigen Speicher gespeichert, wobei anschließend die Veränderung der GUI in einem nichtflüchtigen Speicher gespeichert wird, wobei die Speicherung bevorzugt separat von dem Applikations-Code erfolgt. Zunächst kann folglich eine temporäre Speicherung der Veränderung der GUI insbesondere im Hauptspeicher (RAM) des das Verfahren durchführenden Computersystems erfolgen. Die Speicherung im Hauptspeicher des Computersystems besitzt den Vorteil, dass ein deutlich langsameres Speichern, z.B. auf einer Festplatte des Computersystems entfallen kann. Eventuell bei der Übersetzung vorgenommene mehrmalige Änderungen können somit auf schnelle Art und Weise durchgeführt werden und mit schneller Ansprechgeschwindigkeit auch beispielsweise in der Reproduktion dargestellt werden.

Anschließend, beispielsweise nach Benutzerfreigabe, kann die Änderung in dem nichtflüchtigen Speicher hinterlegt werden. Der nichtflüchtige Speicher kann insbesondere das CMS-System und/oder die genannte Ressourcen-Datei sein. Grundsätzlich ist es auch möglich, die Änderungen direkt in den Applikations-Code der Software-Anwendung zurückzuspeichern, insbesondere unter vorausgehendem Kompilieren der Änderungen, um auf diese Weise direkt eine Software-Anwendung in einer weiteren Sprache zu erhalten.

Weiterer Gegenstand der Erfindung ist eine Vorrichtung, welche zur Durchführung des Verfahrens der vorstehend erläuterten Art eingerichtet ist. Bei der Vorrichtung kann es sich insbesondere um ein Computersystem mit einem Eingabegerät und einem Anzeigegerät handeln, d.h. beispielsweise um einen Personal Computer (PC), um einen Tablet-Computer oder um ein Smartphone. Auf dem Anzeigegerät können sowohl die Software-Anwendung selbst als auch dessen Reproduktion angezeigt werden. Das genannte CMS hingegen kann auf einem separaten Computersystem vorhanden sein, wobei eine Datenverbindung, z.B. mittels Internet, zwischen der Vorrichtung zur Durchführung des erfindungsgemäßen Verfahrens und dem CMS bestehen kann.

Weiterer Gegenstand der Erfindung ist ein Datenträger mit Programmcode darauf, der, wenn ausgeführt, ein Verfahren der oben erläuterten Art durchführt, d.h. implementiert.

Zu der erfindungsgemäßen Vorrichtung und dem erfindungsgemäßen Datenträger gelten die zum erfindungsgemäßen Verfahren getroffenen Aussagen entsprechend, insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: schematisch das Vorgehen zum Auslesen eines Abschnitts des Applikations-Codes einer Software-Anwendung; und
- Fig. 2: schematisch das Vorgehen zum Verändern eines Textbausteins einer GUI der Software-Anwendung.

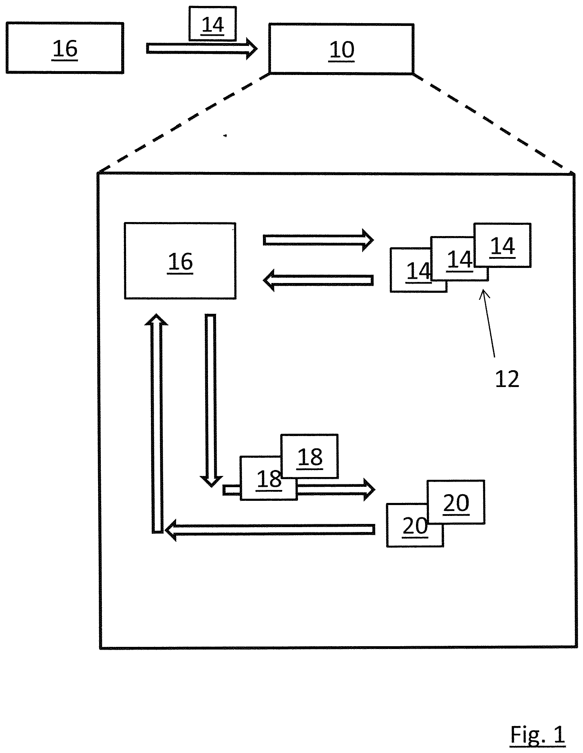

Fig. 1 zeigt schematisch eine Software-Anwendung 10, welche auf einem Applikations-Code 12 basiert. Der Applikations-Code 12 ist ein ausführbarer Code, welcher mehrere dynamische Bibliotheken 14 umfasst oder einbindet. Die dynamischen Bibliotheken 14 sind im vorliegenden Beispiel DLL-Dateien.

In die Software-Anwendung 10 wird ein Injektor 16 in Form einer weiteren dynamischen Bibliothek 14 injiziert. Der Injektor 16 bewirkt, dass die Software-Anwendung 10 mittels des Injektors 16 gesteuert werden kann. Hierzu verwendet der Injektor 16 auch Methoden der Reflection.

Nach dem Injizieren des Injektors 16 werden die in dem Applikations-Code 12 vorhandenen dynamischen Bibliotheken 14 und/oder die eingebundenen dynamischen Bibliotheken 14 ermittelt. Die Informationen aus den dynamischen Bibliotheken 14 werden dann als Binär-Code, im vorliegenden Beispiel als BAML-Dateien 18 ausgelesen und dann mittels des Injektors 16 dekompiliert. Nach dem Dekompilieren liegen dann Quellcode-Dateien vor, die im vorliegenden Beispiel XAML-Dateien 20 sind.

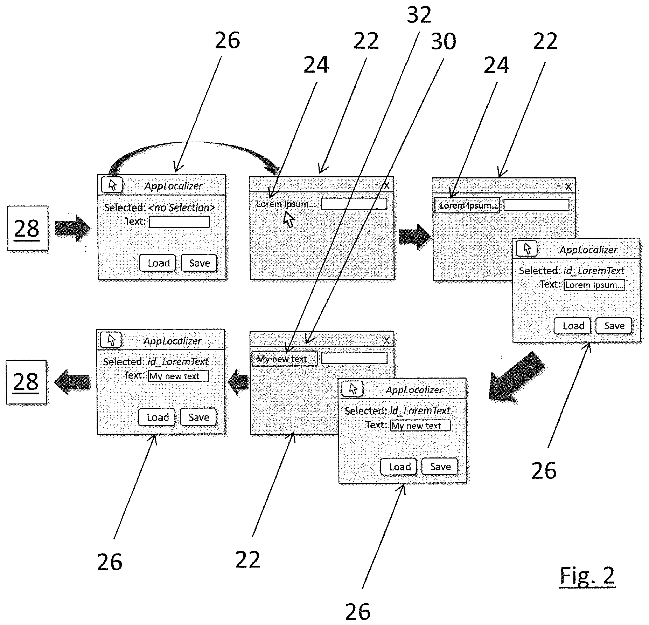

Mit dem Vorliegen der XAML-Dateien 20 ist es dann möglich, eine Veränderung an der Software-Anwendung 10 vorzunehmen, wie mit Bezug auf Fig. 2 nachfolgend beschrieben wird.

Fig. 2 zeigt eine erste grafische Benutzerschnittstelle (erste GUI) 22, welche von der Software-Anwendung 10 erzeugt wird. Die erste GUI 22 umfasst mehrere grafische Elemente, darunter auch ein Textfeld 24 in Originalsprache.

Soll nun eine Übersetzung des Originaltextes 24 vorgenommen werden (d.h. eine Veränderung der ersten GUI 22 erfolgen), kann eine Injektion, wie mit Bezug auf Fig. 1 beschrieben, durchgeführt werden. Die Injektion kann beispielsweise mittels einer zweiten Benutzerschnittstelle (zweite GUI) einer Editor-Software 26 gesteuert werden. Die Editor-Software 26 kann aus einer Ressourcendatei 28 (beispielsweise einer Excel-Datei) die jeweiligen Originaltexte 24 der Software-Anwendung 10 abrufen.

In der Editor-Software 26 kann dann von einem Benutzer der Originaltext 24 angeklickt werden, um zu signalisieren, dass dieser Text ersetzt bzw. übersetzt werden soll. In der Editor-Software 26 kann dann der zu übersetzende Text identifiziert werden und aus der Ressourcendatei 28 oder aus den XAML-Dateien 20 abgerufen werden. Die Übersetzung 32 des Textes kann dann eingegeben werden, wobei eine Reproduktion 30 der ersten GUI 22 angezeigt werden kann, wobei die Reproduktion 30 den übersetzten Text 32 enthält und den übersetzten Text 32 darstellt. Sofern der übersetzte Text 32 als korrekt angesehen wird, kann die somit erfolgte Veränderung der ersten GUI 22 gespeichert werden, wobei der übersetzte Text 32 in der Ressourcendatei 28 abgespeichert wird. Das Abspeichern erfolgt dabei derart, dass der übersetzte Text 32 in der Ressourcendatei 28 dem Originaltext 24 zugeordnet wird.

Somit ist es möglich, dass der Übersetzer auf einfache und bequeme Weise nach und nach eine Übersetzung der vollständigen Software-Anwendung 10 erstellt, wobei jeweils der Kontext des jeweiligen Originaltexts 24 bekannt ist und somit Übersetzungsfehler minimiert werden können.

### Bezugszeichenliste

- 10: Software-Anwendung
- 12: Applikations-Code
- 14: dynamische Bibliothek
- 16: Injektor
- 18: BAML-Datei
- 20: XAML-Datei
- 22: erste GUI
- 24: Originaltext
- 26: Editor-Software
- 28: Ressourcendatei
- 30: Reproduktion
- 32: übersetzter Text

## Patentansprüche

1. Verfahren zum Durchführen von Änderungen an einer Software-Anwendung (10) mit einem Applikations-Code (12), welche eine grafische Benutzerschnittstelle, GUI (22), aufweist, umfassend
- Auslesen zumindest eines Abschnitts des Applikations-Codes (12), wobei der Abschnitt die GUI (22) betrifft,
- Verändern eines Bereichs (24) der GUI (22) und
- Speichern des geänderten Bereichs (32) der GUI (22),
**dadurch gekennzeichnet, dass**
- vor dem Auslesen des zumindest einen Abschnitts des Applikations-Codes (12) eine dynamische Bibliothek (14, 16) in die Software-Anwendung (10) injiziert wird, um eine Steuerung der Software-Anwendung (10) zu gestatten, wobei der Applikations-Code (12) ausführbarer Code ist, in welchen das Injizieren zur Laufzeit des Applikations-Codes (12) erfolgt,
- beim Verändern der GUI (22) ein Grafikelement geändert wird, wobei die Veränderung der GUI (22) eine Veränderung des Abschnitts des Applikations-Codes (12) und/oder einer Instanz des Abschnitts des Applikations-Codes (12) bewirkt, und
- der ausgelesene Abschnitt des Applikations-Codes (12) als Binär-Code ausgelesen wird.

2. Verfahren nach Anspruch 1,
**dadurch gekennzeichnet, dass**
das Auslesen des Abschnitts des Applikations-Codes (12) mittels Reflection erfolgt.

3. Verfahren nach zumindest einem der vorstehenden Ansprüche,
**dadurch gekennzeichnet, dass**
die dynamische Bibliothek (14, 16) ausführbaren Code umfasst, welcher nach dem Injizieren ausgeführt wird.

4. Verfahren nach zumindest einem der vorstehenden Ansprüche,
**dadurch gekennzeichnet, dass**
nach dem Auslesen des Abschnitts des Applikations-Codes (12) der Abschnitt dekompiliert wird.

5. Verfahren nach zumindest einem der vorstehenden Ansprüche,
**dadurch gekennzeichnet, dass**
aus dem Abschnitt des Applikations-Codes (12) eine grafische Reproduktion (30) zumindest eines Teils der GUI (22) der Software-Anwendung (10) erzeugt wird, wobei die grafische Reproduktion (30) bevorzugt in einer weiteren grafischen Benutzerschnittstelle (26) dargestellt wird.

6. Verfahren nach Anspruch 5,
**dadurch gekennzeichnet, dass**
eine Veränderung der grafischen Reproduktion (30) vorgenommen wird, wobei die Veränderung der Reproduktion (30) beispielsweise eine entsprechende Veränderung des Abschnitts des Applikations-Codes (12) bewirkt.

7. Verfahren nach Anspruch 5 oder 6,
**dadurch gekennzeichnet, dass**
die Veränderung der grafischen Reproduktion (30) mittels eines Anzeigegeräts dargestellt wird, um die Auswirkung der Veränderung darzustellen.

8. Verfahren nach zumindest einem der vorstehenden Ansprüche,
**dadurch gekennzeichnet, dass**
mittels eines Eingabegeräts ein Bereich oder eine Position in der GUI (22) ausgewählt wird, wobei der ausgelesene Abschnitt des Applikations-Codes (12) den ausgewählten Bereich und/oder die ausgewählte Position betrifft.

9. Verfahren nach zumindest einem der vorstehenden Ansprüche,
**dadurch gekennzeichnet, dass**
beim Verändern der GUI (22) ein Grafikelement geändert wird, wobei das beim Verändern der GUI (22) geänderte Grafikelement ein Textbaustein (24) ist.

10. Verfahren nach zumindest einem der vorstehenden Ansprüche,
**dadurch gekennzeichnet, dass**
eine Datenverbindung mit einem Redaktionssystem (CMS) hergestellt wird, wobei in dem CMS bevorzugt zumindest ein Teil von in der Software-Anwendung (10) enthaltenen Textbausteinen gespeichert ist, wobei Veränderungen an der GUI (22) und/oder an dem Abschnitt des Applikations-Codes (12) an das CMS übertragen werden.

11. Verfahren nach zumindest einem der vorstehenden Ansprüche,
**dadurch gekennzeichnet, dass**
die Veränderung der GUI (22) zunächst in einem flüchtigen Speicher gespeichert wird, wobei anschließend die Veränderung der GUI (22) in einem nichtflüchtigen Speicher gespeichert wird, wobei die Speicherung bevorzugt separat von dem Applikations-Code (12) erfolgt.

12. Vorrichtung, die zur Durchführung des Verfahrens nach einem der vorherigen Ansprüche ausgebildet ist.

13. Datenträger mit Programmcode darauf, der, wenn ausgeführt, ein Verfahren nach einem der Ansprüche 1 bis 11 implementiert.

## Claims

1. A method of carrying out modifications to a software application (10) having an application code (12) which has a graphical user interface (GUI) (22), said method comprising
- reading at least one portion of the application code (12), with the portion relating to the GUI (22);
- modifying a section (24) of the GUI (22); and
- saving the modified section (32) of the GUI (22),
**characterized in that**,
- before the at least one portion of the application code (12) is read, a dynamic library (14, 16) is injected into the software application (10) to allow a control of the software application (10), with the application code (12) being executable code in which the injection takes place during the runtime of the application code (12);
- a graphical element is modified on the modification of the GUI (22), with the modification of the GUI (22) effecting a modification of the portion of the application code (12) and/or of an instance of the portion of the application code (12); and
- the read portion of the application code (12) is read as a binary code.

2. A method in accordance with claim 1,
**characterized in that**
the reading of the portion of the application code (12) takes place by means of reflection.

3. A method in accordance with at least one of the preceding claims, **characterized in that**
the dynamic library (14, 16) comprises executable code which is executed after the injection.

4. A method in accordance with at least one of the preceding claims,
**characterized in that**,
after the reading of the portion of the application code (12), the portion is decompiled.

5. A method in accordance with at least one of the preceding claims,
**characterized in that**
a graphical reproduction (30) of at least some of the GUI (22) of the software application (10) is generated from the portion of the application code (12), with the graphical reproduction (30) preferably being presented in a further graphical user interface (26).

6. A method in accordance with claim 5,
**characterized in that**
a modification of the graphical reproduction (30) is carried out, with the modification of the reproduction (30), for example, effecting a corresponding modification of the portion of the application code (12).

7. A method in accordance with claim 5 or claim 6,
**characterized in that**
the modification of the graphical reproduction (30) is presented by means of a display device to present the effect of the modification.

8. A method in accordance with at least one of the preceding claims,
**characterized in that**
a section or a position in the GUI (22) is selected by means of an input device, with the read portion of the application code (12) relating to the selected section and/or to the selected position.

9. A method in accordance with at least one of the preceding claims,
**characterized in that**
a graphical element is modified on the modification of the GUI (22), with the graphical element which is modified on the modification of the GUI (22) being a text module (24).

10. A method in accordance with at least one of the preceding claims,
**characterized in that**
a data link to an editorial system (CMS) is established, with at least some of the text modules contained in the software application (10) preferably being stored in the CMS, with modifications to the GUI (22) and/or to the portion of the application code (12) being transferred to the CMS.

11. A method in accordance with at least one of the preceding claims,
**characterized in that**
the modification of the GUI (22) is first stored in a volatile memory, with the modification to the GUI (22) subsequently being stored in a non-volatile memory, with the storage preferably taking place separately from the application code (12).

12. An apparatus which is configured for carrying out the method in accordance with any one of the preceding claims.

13. A data carrier having program code on it which, when executed, implements a method in accordance with any one of the claims 1 to 11.

## Revendications

1. Procédé pour apporter des modifications à une application logicielle (10) ayant une interface utilisateur graphique, GUI (22), avec un code d'application, consistant à
- lire au moins une section du code d'application (12), la section concernant la GUI (22),
- modifier une zone (24) de la GUI (22) et
- mémoriser la zone modifiée (32) de la GUI (22),
**caractérisé en ce que**
- avant de lire ladite au moins une section du code d'application (12), une bibliothèque dynamique (14, 16) est injectée dans l'application logicielle (10) pour permettre le contrôle de l'application logicielle (10), le code d'application (12) étant un code exécutable dans lequel l'injection est effectuée pendant l'exécution du code d'application (12),
- lors de la modification de la GUI (22), un élément graphique est modifié, la modification de la GUI (22) entraînant une modification de la section du code d'application (12) et/ou d'une instance de la section du code d'application (12), et
- la section lue du code d'application (12) est lue comme un code binaire.

2. Procédé selon la revendication 1,
**caractérisé en ce que**
la lecture de la section du code d'application (12) s'effectue par réflexion informatique (Reflection).

3. Procédé selon l'une au moins des revendications précédentes,
**caractérisé en ce que**
la bibliothèque dynamique (14, 16) contient un code exécutable qui est exécuté après l'injection.

4. Procédé selon l'une au moins des revendications précédentes,
**caractérisé en ce que**
après avoir lu la section du code d'application (12), la section est décompilée.

5. Procédé selon l'une au moins des revendications précédentes,
**caractérisé en ce que**
une reproduction graphique (30) d'au moins une partie de la GUI (22) de l'application logicielle (10) est générée à partir de la section du code d'application (12), la reproduction graphique (30) étant de préférence représentée dans une autre interface utilisateur graphique (26).

6. Procédé selon la revendication 5,
**caractérisé en ce que**
une modification de la reproduction graphique (30) est effectuée, la modification de la reproduction (30) entraînant par exemple une modification correspondante de la section du code d'application (12).

7. Procédé selon la revendication 5 ou 6,
**caractérisé en ce que**
la modification de la reproduction graphique (30) est affichée au moyen d'un dispositif d'affichage pour représenter l'effet de la modification.

8. Procédé selon l'une au moins des revendications précédentes,
**caractérisé en ce que**
un dispositif de saisie est utilisé pour sélectionner une zone ou une position dans la GUI (22), la section lue du code d'application (12) concernant la zone et/ou la position sélectionnée(s).

9. Procédé selon l'une au moins des revendications précédentes,
**caractérisé en ce que**
lors de la modification de la GUI (22), un élément graphique est modifié, l'élément graphique modifié lors de la modification de la GUI (22) étant un module de texte (24).

10. Procédé selon l'une au moins des revendications précédentes,
**caractérisé en ce que**
une connexion de données avec un système éditorial (CMS) est établie, le CMS stockant de préférence au moins une partie des modules de texte contenus dans l'application logicielle (10), les modifications apportées à la GUI (22) et/ou à la section du code d'application (12) étant transférées au CMS.

11. Procédé selon l'une au moins des revendications précédentes,
**caractérisé en ce que**
la modification de la GUI (22) est tout d'abord stockée dans une mémoire volatile, la modification de la GUI (22) étant ensuite stockée dans une mémoire non volatile, le stockage s'effectuant de préférence séparément du code d'application (12).

12. Dispositif réalisé pour mettre en œuvre le procédé selon l'une des revendications précédentes.

13. Support de données portant un code de programme qui, lorsqu'il est exécuté, met en oeuvre un procédé selon l'une des revendications 1 à 11.
